# EUROPEAN PATENT APPLICATION

(11) **EP 4 851 025 A1**
(43) Date of publication of application: **09.12.2026**
(21) Application number: 25181068.5
(22) Date of filing: 05.06.2025
(51) Int. Cl.: B62D 59/04, B60L 15/32, B60L 15/38

(54) **CONTROLLING A TRAILER OF A VEHICLE COMBINATION**

(71) Applicant: Volvo Truck Corporation, 405 08 Göteborg (SE)
(72) Inventor: GELSO, Esteban, VÄSTRA FRÖLUNDA (SE); SADEGHI KATI, Maliheh, ÖJERSJÖ (SE)
(74) Representative: Ström & Gulliksson AB

(57) **Abstract**

A computer system and computer-implemented method are disclosed for motion control of a trailer of a vehicle combination comprising a towing vehicle and at least one trailer comprising an electric drivetrain. The computer-implemented method comprises: transmitting, by processing circuitry of a computer system, a request for an operational mode of the electric drivetrain of the trailer to a controller of the trailer, wherein the request comprises: a first request to electrically or mechanically decouple the electric drivetrain of the trailer from the wheels of the trailer; a second request for only positive torque operation of the electric drivetrain of the trailer; a third request for only negative torque operation of the electric drivetrain of the trailer; or a fourth request for zero-torque operation of the electric drivetrain of the trailer.

## Description

### TECHNICAL FIELD

The disclosure relates generally to a vehicle motion management. In particular aspects, the disclosure relates to controlling a trailer of a vehicle combination. The disclosure can be applied in heavy-duty vehicles, such as trucks, buses, multi-unit vehicle combinations, and construction equipment. Although the disclosure may be described with respect to a particular implementation, the disclosure is not restricted to any particular implementation.

### BACKGROUND

Hybrid or fully electric vehicle combination configurations, including combinations of internal combustion engine (ICE) or battery-electric trucks with electric trailers (e-trailers), are gaining interest due to their potential to improve operational efficiency and reduce emissions in the transportation sector. These combinations introduce new integration challenges, particularly regarding compatibility across vehicle types and digital communication protocols. In practice, varying levels of connectivity between towing vehicles and e-trailers can impact management of e-trailer behaviour and achieving stable and safe force distribution and efficient operation. It may therefore be desirable to provide for improved control of the trailer in a manner that ensures safe and efficient operation under varying vehicle conditions.

### SUMMARY

This disclosure provides systems, methods and other approaches for motion control of a trailer of a vehicle combination having a towing vehicle (truck) and at least one trailer. In particular, a request for an operational mode of the electric drivetrain of a trailer is sent from a controller of the truck to a controller of the trailer. The request comprises either a request to decouple the electric drivetrain, a request for only positive torque operation of the electric drivetrain, a request for only negative torque operation of the electric drivetrain, or a request for zero-torque operation of the electric drivetrain. The different requests can also be based on an intended direction of motion of the vehicle combination. In this way, operation of the electric driveline of a trailer may be controlled in an improved manner that ensures safe and efficient operation of the vehicle combination under varying conditions.

According to a first aspect of the disclosure, there is provided a computer system for motion control of a trailer of a vehicle combination, the vehicle combination comprising a towing vehicle and at least one trailer, the trailer comprising an electric drivetrain, the computer system comprising processing circuitry configured to: transmit a request for an operational mode of the electric drivetrain of the trailer to a controller of the trailer, wherein the request comprises: a first request to electrically or mechanically decouple the electric drivetrain of the trailer from the wheels of the trailer; a second request for only positive torque operation of the electric drivetrain of the trailer; a third request for only negative torque operation of the electric drivetrain of the trailer; or a fourth request for zero-torque operation of the electric drivetrain of the trailer.

The first aspect of the disclosure may seek to provide a computer system that enables improved control of the electric driveline of a trailer that ensures safe and efficient operation of the vehicle combination under varying conditions. In particular, control strategies on the towing vehicle side are enhanced, which enables improved management of e-trailer behaviour and achieving safe and efficient integration of e-trailers into vehicle combinations.

Optionally in some examples, including in at least one preferred example, the processing circuitry is configured to transmit the first request in response to receiving, from the controller of the trailer, a capability for disconnection of the electric drivetrain of the trailer. A technical benefit may include that the request for disconnection electric drivetrain may only be sent when it is known that such disconnection is possible.

Optionally in some examples, including in at least one preferred example, the processing circuitry is configured to transmit the first request in response to determining that operation of the electric drivetrain of the trailer is not required or will not be required. A technical benefit may include that idle losses, for example losses due to friction between moving parts of the motor/transmission, magnetic losses, losses due to air resistance around the rotating components of the motor, and the like, may be reduced when electric machines are not being used.

Optionally in some examples, including in at least one preferred example, the processing circuitry is configured to transmit the second, third, or fourth request during intended forward motion of the vehicle combination. A technical benefit may include that relevant control of the electric driveline may be provided for intended forward motion of the vehicle combination, even if the vehicle is moving backward.

Optionally in some examples, including in at least one preferred example, the processing circuitry is configured to transmit the second request in response to determining an uphill gradient, initiation of a lane change manoeuvre by the vehicle combination, or the presence of trailer swing in the vehicle combination. A technical benefit may include that maximum propulsion power of the vehicle combination may be achieved in order to climb a hill or to execute a successful overtaking manoeuvre. Moreover, the trailer may react quickly to any propulsion requests sent by the towing vehicle.

Optionally in some examples, including in at least one preferred example, the processing circuitry is configured to transmit the third request in response to determining a downhill gradient or initiation of a turn manoeuvre by the vehicle combination. A technical benefit may include that the speed of the vehicle combination may be maintained without the trailer gaining excessive speed and pushing the towing vehicle, which may ensure safety and stability on downhill gradients and/or during turns. Moreover, the trailer may react quickly to any propulsion requests sent by the towing vehicle, and wear of the electric drivetrain may be reduced.

Optionally in some examples, including in at least one preferred example, the processing circuitry is configured to transmit the fourth request in response to determining initiation of a mass estimation process of the vehicle combination or a stability control function of the vehicle combination. A technical benefit may include that specific scenarios can be taken care of by the towing unit controller or service brake actions associated with stability functions, while enabling the trailer controller to react quickly to any propulsion or brake requests sent by the towing vehicle controller as it is not decoupled.

Optionally in some examples, including in at least one preferred example, the processing circuitry is configured to transmit the second, third, or fourth request during intended rearward motion of the vehicle combination. A technical benefit may include that relevant control of the electric driveline may be provided for intended rearward motion of the vehicle combination, even if the vehicle is moving forward.

Optionally in some examples, including in at least one preferred example, the processing circuitry is configured to transmit the second request in response to determining a downhill gradient or initiation of a turn manoeuvre by the vehicle combination. A technical benefit may include that the speed of the vehicle combination may be maintained without the trailer pushing the towing vehicle, which may ensure safety and stability when reversing downhill and/or during turns. Moreover, the trailer may react quickly to any propulsion requests sent by the towing vehicle, and wear of the electric drivetrain may be reduced.

Optionally in some examples, including in at least one preferred example, the processing circuitry is configured to transmit the third request in response to determining an uphill gradient or the presence of jack-knifing in the vehicle combination. A technical benefit may include that maximum propulsion power of the vehicle combination may be achieved in order to reverse uphill or prevent jack-knifing. Moreover, the trailer may react quickly to any propulsion requests sent by the towing vehicle.

Optionally in some examples, including in at least one preferred example, the processing circuitry is configured to transmit the fourth request in response to determining initiation of a mass estimation process of the vehicle combination or a stability control function of the vehicle combination. A technical benefit may include that specific scenarios can be taken care of by the towing unit controller or service brake actions associated with stability functions, while enabling the trailer controller to react quickly to any propulsion or brake requests sent by the towing vehicle controller as it is not decoupled.

Optionally in some examples, including in at least one preferred example, the fourth request comprises a request to reach zero-torque operation of the electric drivetrain of the trailer in a shortest possible time. A technical benefit may include that any stability issues affecting the vehicle combination may be controlled in a timely fashion.

Optionally in some examples, including in at least one preferred example, the first or fourth request comprises a request to prevent the controller of the trailer from controlling the electric drivetrain of the trailer. A technical benefit may include that force, torque, acceleration requests and the like can be prohibited from at the trailer side, meaning that control strategies on the towing vehicle side are enhanced.

According to a second aspect of the disclosure, there is provided a vehicle combination comprising a towing vehicle, a trailer having an electric drivetrain, and a computer system according to the first aspect. The second aspect of the disclosure may seek to provide a vehicle combination capable of controlling the electric driveline of a trailer in an improved manner that ensures safe and efficient operation of the vehicle combination under varying conditions. A technical benefit may include that control strategies on the towing vehicle side are enhanced, which enables improved management of e-trailer behaviour and achieving safe and efficient integration of e-trailers into vehicle combinations.

According to a third aspect of the disclosure, there is provided a computer-implemented method for motion control of a trailer of a vehicle combination, the vehicle combination comprising a towing vehicle and at least one trailer, the trailer comprising an electric drivetrain, the computer-implemented method comprising: transmitting, by processing circuitry of a computer system, a request for an operational mode of the electric drivetrain of the trailer to a controller of the trailer, wherein the request comprises: a first request to electrically or mechanically decouple the electric drivetrain of the trailer from the wheels of the trailer; a second request for only positive torque operation of the electric drivetrain of the trailer; a third request for only negative torque operation of the electric drivetrain of the trailer; or a fourth request for zero-torque operation of the electric drivetrain of the trailer.

The third aspect of the disclosure may seek to provide a computer-implemented method that enables improved control of the electric driveline of a trailer that ensures safe and efficient operation of the vehicle combination under varying conditions. In particular, control strategies on the towing vehicle side are enhanced, which enables improved management of e-trailer behaviour and achieving safe and efficient integration of e-trailers into vehicle combinations.

According to a fourth aspect of the disclosure, there is provided a computer program product comprising program code for performing, when executed by the processing circuitry, the computer-implemented method of the third aspect. The fourth aspect of the disclosure may seek to enable new vehicles and/or legacy vehicles to be conveniently configured, by software installation/update, to provide improved control of the electric driveline of a trailer that ensures safe and efficient operation of the vehicle combination under varying conditions. A technical benefit may include that control strategies on the towing vehicle side are enhanced, which enables improved management of e-trailer behaviour and achieving safe and efficient integration of e-trailers into vehicle combinations.

According to a fifth aspect of the disclosure, there is provided a non-transitory computer-readable storage medium comprising instructions, which when executed by the processing circuitry, cause the processing circuitry to perform the computer-implemented method of the third aspect. The fifth aspect of the disclosure may seek to enable new vehicles and/or legacy vehicles to be conveniently configured, by software installation/update, to provide improved control of the electric driveline of a trailer that ensures safe and efficient operation of the vehicle combination under varying conditions. A technical benefit may include that control strategies on the towing vehicle side are enhanced, which enables improved management of e-trailer behaviour and achieving safe and efficient integration of e-trailers into vehicle combinations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**Fig. 1** illustrates a vehicle combination according to an example of the disclosure.
**Fig. 2** is an exemplary computer system according to an example.
**Fig. 3** is a flow chart of a computer-implemented method according to an example of the disclosure.
**Fig. 4** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Hybrid or fully electric trailer configurations introduce new integration challenges, particularly regarding compatibility across vehicle types and digital communication protocols. In practice, varying levels of connectivity between towing vehicles and e-trailers can impact management of e-trailer behaviour and achieving stable and safe force distribution and efficient operation. In current implementations, towing vehicles have limited capability to control e-trailers, which can reduce the ability of the towing vehicle to control the efficiency of the vehicle as a whole. This may present technical challenges regarding safe and efficient operation of vehicle combinations, especially when the trailer operates its own electric drivetrain partially independently of the towing vehicle. It may therefore be desirable to provide for improved control of the trailer in a manner that ensures safe and efficient operation under varying vehicle and connectivity conditions.

To remedy this, systems, methods and other approaches are provided for motion control of a trailer of a vehicle combination having a towing vehicle (truck) and at least one trailer. In particular, a request for an operational mode of the electric drivetrain of a trailer is sent from a controller of the truck to a controller of the trailer. The request comprises either a request to decouple the electric drivetrain, a request for only positive torque operation of the electric drivetrain, a request for only negative torque operation of the electric drivetrain, or a request for zero-torque operation of the electric drivetrain. The different requests can also be based on an intended direction of motion of the vehicle combination. In this way, operation of the electric driveline of a trailer may be controlled in an improved manner that ensures safe and efficient operation of the vehicle combination under varying conditions. In particular, control strategies on the truck side are enhanced, which enables improved management of e-trailer behaviour and achieving safe and efficient integration of e-trailers into vehicle combinations. For example, the truck can request to electrically (disable inverter) or mechanically (clutch) disconnect an e-axle drivetrain, which can help reduce idle losses when electric machines are not being used. Moreover, the truck can send the trailer a request mode for no propulsion or no drive, or no regenerative braking, of a self-control e-trailer, which enables the trailer to react quickly to any propulsion or brake requests sent by the truck.

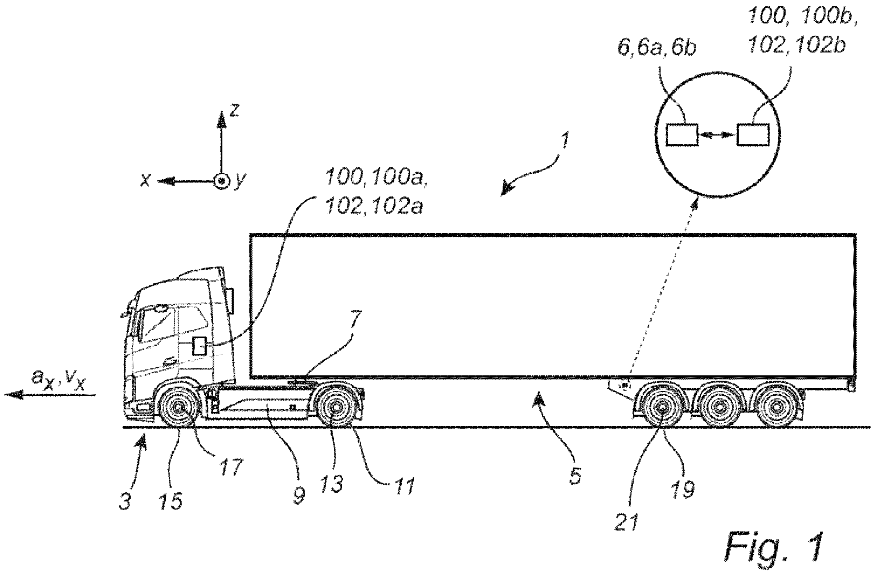

**Fig. 1** is an exemplary vehicle combination according to an example. The vehicle combination **1** is here a truck-trailer vehicle combination. The vehicle combination **1** comprises a towing vehicle **3** and a trailer **5.** As used herein, the term "towing vehicle" refers to any powered vehicle unit that pulls or controls a trailer, and may include, for example, a tractor in a tractor-trailer configuration. Referring to **Fig. 1****,** the towing vehicle **3** is illustrated as a tractor. The trailer **5** is coupled to the towing vehicle **3.** In the example in **Fig. 1****,** the trailer **5** is a semitrailer that is coupled to the towing vehicle **3** by means of a fifth-wheel coupling **7.** In this example, the towing vehicle **3** comprises an electric drivetrain **9.** The electric drivetrain **9** typically comprises one or more electric machines and one or more energy storage systems, such as one or more battery packs. The towing vehicle **3** is thus a towing electric vehicle. In other examples, the towing vehicle **3** may be operated by other power systems, such as an internal combustion engine, a fuel cell system and the like. Hence, the towing vehicle **3** may comprise one or more propulsion systems of different kinds. As is indicated in **Fig. 1****,** the towing vehicle **3** has driving wheels **11** on a rear drive axle **13,** and front wheels **15** on a front axle **17.** The towing vehicle **3** may have different types of configurations, including e.g. one or more additional drive axles.

The trailer **5** has wheels **19** on at least one trailer axle **21.** The trailer **5** typically comprises a number of trailer axles **21,** each axle **21** having a pair of wheels **19.** Moreover, the trailer **5** comprises an electric drivetrain **6.** In the context of the present disclosure, the term "trailer" refers to a vehicle unit configured to be coupled to a towing vehicle and comprising an electric drivetrain. The trailer **5** is capable of providing propulsive force by means of the electric drivetrain **6,** optionally in coordination with the propulsion system of the towing vehicle **3,** such as the electric drivetrain **9.**

The trailer **5** may also be configured to recuperate energy during motion, such as through regenerative braking. The electric drivetrain **6** may be integrated within the trailer structure or arranged externally as a modular unit, and may comprise at least one electric machine, associated power electronics, and optionally an energy storage system, such as a battery pack and/or supercapacitor. In **Fig. 1****,** the electric drivetrain **6** comprises an electric machine **6a** and a battery pack **6b.**

**Fig. 1** shows one example of a combination vehicle **1** having a fifth-wheel coupling **7** for articulated coupling between the towing vehicle **3** and a trailer in the form of a semitrailer **5.** It should be noted that the present disclosure may also relate to other combination vehicles with other configurations, such as other articulated joints and/or other trailers.

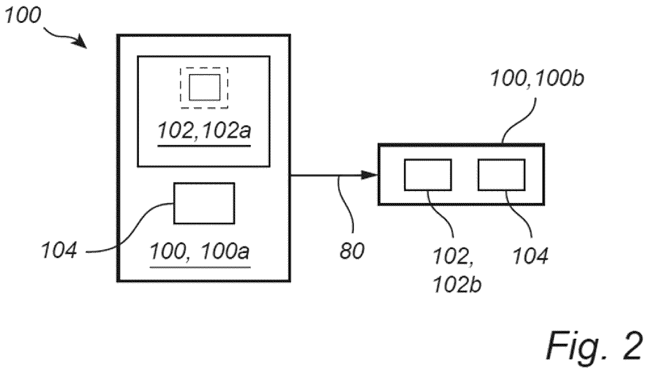

Moreover, the vehicle combination **1** comprises a computer system **100.** The computer system **100** comprises one or more processing circuitry units **102, 102a, 102b.** The computer system **100** is configured to control the trailer **5,** and typically also the vehicle combination **1,** wherein the computer system **100** is configured to control both the towing vehicle **3** and the trailer **5.** In the present example, illustrated in **Fig. 2****,** the processing circuitry **102a** is arranged in the towing vehicle **3,** and the processing circuitry **102b** is arranged in the trailer **5.** For example, the computer system **100** may comprise a towing vehicle controller **100a** including the processing circuitry **102a** and a trailer controller **100b** including the processing circuitry **102b.** The processing circuitry **102b** is configured to control the electric drivetrain **6** and to communicate with the processing circuitry **102a.** In the following examples, the configuration of the computer system **100** will be described with reference to this embodiment, in which the processing circuitry **102** is provided in the form of a towing vehicle processing circuitry **102a** and a trailer processing circuitry **102b.**

In other examples, the computer system **100** may alternatively be a centralized computer system arranged entirely in the towing vehicle **3;** a centralized computer system arranged entirely in the trailer **5;** a distributed computer system with primary control functionality located in the trailer **5** and secondary functionality in the towing vehicle **3;** or a distributed computer system with primary control functionality located in the towing vehicle **3** and secondary functionality in the trailer **5.** Accordingly, it should be noted that the computer system **100** need not necessarily be included in the towing vehicle **3,** but that it may be at least partly included in another part of the vehicle combination **1,** or partly or wholly included in a cloud solution, so that processing by the processing circuitry **102** may be performed remotely from the towing vehicle **3.** If included in the towing vehicle **3,** the computer system **100** may be provided in the form of a centralized vehicle control unit, or as (a part of) a distributed vehicle control system, which may, for example, include a vehicle motion management control unit and/or a braking system control unit. The trailer **5** may include corresponding trailer motion management control unit and/or a braking system control unit.

The communication between the towing vehicle processing circuitry **102a** and the trailer processing circuitry **102b** may be established in any suitable way, for example via a circuit or any other wired, wireless, or network connection known in the art. The communication between the towing vehicle processing circuitry **102a** and the trailer processing circuitry **102b** may be implemented as a direct connection between the towing vehicle processing circuitry **102a** and the trailer processing circuitry **102b** or may be implemented as a connection via one or more intermediate entities. For example, the communication between the towing vehicle processing circuitry **102a** and the trailer processing circuitry **102b** may be established via a digital communication link. The communication link may be implemented using any suitable vehicle interface standard or protocol, including but not limited to Controller Area Network (CAN), FlexRay, Ethernet-based communication, or dedicated powerline or wireless communication channels. In some examples, the communication is performed over an existing tractor-trailer interface conforming to a standardized communication protocol, while in other embodiments, a proprietary or supplementary interface may be used. The communication may be continuous or event-triggered and may support bi-directional data exchange, including the transmission of control limits, status data, operational region classifications, actuator states, sensor values, and fallback mode activations. In certain examples, a communication abstraction layer may be employed to ensure compatibility across different tractor-trailer interface versions or vendors.

**Fig. 2** shows an exemplary computer system **100** according to an example. The computer system **100** is configured to control the trailer **5,** as described herein. The computer system **100** is also configured to control the towing vehicle **3,** as is per se known. In **Fig. 2****,** a configuration of the computer system **100** will be described in which the processing circuitry **102** is provided in the form of the towing vehicle processing circuitry **102a** and the trailer processing circuitry **102b.** Accordingly, in **Fig. 2****,** the vehicle combination **1** comprises the computer system **100.** The computer system **100** may be coupled to a vehicle motion management controller of the towing vehicle **3,** and may receive and transmit control commands, instructions and signals as described herein.

**In** **Fig. 2****,** the processing circuitry **102, 102a, 102b** is configured to determine an operational mode for the electric drivetrain **6** of the trailer **5.** In particular, the operational mode is determined by the towing vehicle controller **100a** (e.g. using the towing vehicle processing circuitry **102a)** and a corresponding request **80** is transmitted to the trailer controller **100b** (including the trailer processing circuitry **102b).** A request **80** for an operational mode is a request to implement the operational mode in the trailer **5.** In response to receiving the request **80,** the trailer controller **100b** may implement the requested operational mode. The request **80** may, in some examples, be an instruction that the operational mode must be implemented by the trailer controller **100b.** The operational mode is one of a plurality of predefined operational modes, as will be discussed below. The plurality of predefined operational modes may typically be stored in a memory **104** of the computer system **100** and used by the processing circuitry **102** during operation of the vehicle combination **1.**

The plurality of predefined operational modes comprises three sets of operational modes A, B, and C. In a first set of operational modes, hereinafter denoted mode A, the electric drivetrain **6** of the trailer **5** is decoupled from the wheels **19** and/or axles **21** of the trailer **5.** In a second set of operational modes, hereinafter denoted modes B, the electric drivetrain **6** of the trailer **5** is operated during intended forward motion (e.g. in a normal direction of travel) of the vehicle combination **1.** In a third set of operational modes, hereinafter denoted modes C, the electric drivetrain **6** of the trailer **5** is operated during intended rearward motion (e.g. against a normal direction of travel) of the vehicle combination **1.**

In mode A, the electric drivetrain **6** of the trailer **5** is decoupled from the wheels **19** of the trailer **5.** Decoupling the electric drivetrain **6** can be achieved electrically, e.g. by disabling a respective inverter between one or more (e.g. all) electric machines **6a** and a battery pack **6b** of the electric drivetrain **6.** Decoupling the electric drivetrain **6** can additionally or alternatively be achieved mechanically, e.g. by disengaging a clutch to disconnect one or more (e.g. all) electric machines **6a** from an associated wheel **19** and/or axle **21** of the trailer **5.** It will be appreciated that decoupling the electric drivetrain **6** from an axle **21** will inherently decouple the electric drivetrain **6** from an associated wheel **19.**

Decoupling the electric drivetrain **6** of the trailer **5** may be performed in response to determining that operation of the electric drivetrain **6** is not required or will not be required. These scenarios may be determined in any suitable manner known in the art. For example, this may be a tactical decision to allow the wheels **19** of the trailer **5** to roll when the electric machine(s) **6a** are not being used or will not be used for e.g. propulsion or braking. For example, it may be determined that the electric machine(s) **6a** shall not be used during a certain period of time, which may be above a suitable predefined threshold. A decision to decouple the electric drivetrain **6** may be made, for example, based on road conditions such as an (e.g. downhill) incline and/or vehicle parameters such as the mass and velocity of the vehicle combination **1.**

Decoupling the electric drivetrain **6** of the trailer **5** may reduce idle losses when the electric machine(s) **6a** are not being used, for example losses due to friction between moving parts of the motor/transmission, magnetic losses, losses due to air resistance around the rotating components of the motor, and the like. This may also save energy and minimize the need for braking. Decoupling the electric drivetrain **6** of the trailer **5** may stop self-control of the trailer **5,** i.e. prevent the trailer controller **100b** from controlling (e.g. determining force, torque, acceleration requests and the like) the electric drivetrain **6.**

Decoupling the electric drivetrain **6** of the trailer **5** may be performed in response to receiving a capability or status for disconnection of the electric drivetrain **6** from the trailer controller **100b.** For example, the trailer controller **100b** may send one of the following capabilities for disconnection of the electric drivetrain **6** to the towing vehicle controller **100a:** disconnection possible, connection possible, connection or disconnection not allowed. Similarly, the trailer controller **100b** may send one of the following statuses of the electric drivetrain **6** to the towing vehicle controller **100a:** disconnected, connected, error, not available or not installed. Based on the capability and/or the status, a decision to decouple the electric drivetrain **6** may be made.

In modes B, the electric drivetrain **6** of the trailer **5** is operated during intended forward motion (e.g. in a normal direction of travel) of the vehicle combination **1,** within which a number of operational modes are defined. An intended forward direction of motion refers to a planned and/or desired forward direction of motion. In some cases, this may differ from that actual direction of motion. For example, it may be intended to move forward while going uphill, but the high resistive forces (e.g. due to gravity) may cause the vehicle combination **1** to move backward.

In a first mode of modes B, hereinafter denoted mode B0, no limits are placed on the trailer controller **100b** during operation of the electric drivetrain **6.** The trailer controller **100b** may therefore control (e.g. determining force, torque, acceleration requests and the like) the electric drivetrain **6** in any suitable way, and the trailer **5** may be considered to be self-controlling. This may be considered standard forward operation of the electric drivetrain **6.**

In a second mode of modes B, hereinafter denoted mode B1, the trailer controller **100b** is limited to only negative torque operation of the electric drivetrain **6** (i.e. no propulsion or drive that is positive). This may be implemented in response to determining a downhill gradient or initiation of a turn manoeuvre by the vehicle combination **1.** These scenarios may be determined in any suitable manner known in the art. This may help to maintain the speed of the vehicle combination **1** without the trailer **5** gaining excessive speed and pushing the towing vehicle **3,** which may ensure safety and stability on downhill gradients and/or during turns. Avoiding trailer propulsion when it is not needed may also reduce wear of the electric drivetrain **6.**

In a third mode of modes B, hereinafter denoted mode B2, the trailer controller **100b** is limited to only positive torque operation of the electric drivetrain **6** (i.e. no regenerative braking or use of a retarder for additional braking power). This may be implemented in response to determining an uphill gradient, initiation of a lane change manoeuvre by the vehicle combination **1,** or the presence of trailer swing in the vehicle combination **1.** These scenarios may be determined in any suitable manner known in the art. This may enable maximum propulsion power of the vehicle combination **1** to be achieved in order to climb a hill or to execute a successful overtaking manoeuvre.

In a fourth mode of modes B, hereinafter denoted mode B3, the trailer controller **100b** is limited to zero-torque operation of the electric drivetrain **6** (i.e. no propulsion or drive that is positive, no regenerative braking or use of a retarder). This may be implemented in response to determining initiation of a mass estimation process of the vehicle combination **1** or a stability control function (e.g. electronic stability control, coupling force control, roll stability control, and traction control) of the vehicle combination **1.** These scenarios may be determined in any suitable manner known in the art. This enables the trailer controller **100b** to react quickly to any propulsion or brake requests sent by the towing vehicle controller **100a,** since reconnecting the electric drivetrain **6** in the case of decoupling takes time (e.g., hundreds of milliseconds). In a sub-mode of mode B3, hereinafter denoted mode B3X, the trailer controller **100b** is requested to reach zero-torque operation of the electric drivetrain **6** in a shortest possible time. This may be known as a fast cut. This may be triggered, for example, due to a stability issue in the vehicle combination **1,** for example based on the severity or the time of detection or prediction, which may be affected by road conditions, vehicle combination type, loading conditions, and the like. Limiting the trailer controller **100b** to zero-torque operation of the electric drivetrain **6** may stop self-control of the trailer **5,** i.e. prevent the trailer controller from **100b** controlling (e.g. determining force, torque, acceleration requests and the like) the electric drivetrain **6.**

In modes C, the electric drivetrain **6** of the trailer **5** is operated during intended rearward motion (e.g. against a normal direction of travel) of the vehicle combination **1,** within which a number of operational modes are defined. An intended rearward direction of motion refers to a planned and/or desired rearward direction of motion. In some cases, this may differ from that actual direction of motion. For example, it may be intended to move backwards while going uphill, but the high resistive forces (e.g. due to gravity) may cause the vehicle combination **1** to move forward.

In a first mode of modes C, hereinafter denoted mode C0, no limits are placed on the trailer controller **100b** during operation of the electric drivetrain **6.** The trailer controller **100b** may therefore control (e.g. determining force, torque, acceleration requests and the like) the electric drivetrain **6** in any suitable way, and the trailer **5** may be considered to be self-controlling. This may be considered standard rearward operation of the electric drivetrain **6.**

In a second mode of modes C, hereinafter denoted mode C1, the trailer controller **100b** is limited to only positive torque operation of the electric drivetrain **6** (i.e. no propulsion or drive that is negative). This may be implemented in response to determining a downhill gradient (i.e. reversing downhill) or initiation of a turn manoeuvre by the vehicle combination **1.** These scenarios may be determined in any suitable manner known in the art. This may help to maintain the speed of the vehicle combination **1** without the trailer **5** pushing the towing vehicle **3,** which may ensure safety and stability when reversing downhill and/or during turns. Avoiding trailer propulsion when it is not needed may also reduce wear of the electric drivetrain **6.**

In a third mode of modes C, hereinafter denoted mode C2, the trailer controller 100b is limited to only negative torque operation of the electric drivetrain **6** (i.e. no regenerative braking or use of a retarder). This may be implemented in response to determining an uphill gradient (i.e. reversing uphill) or the presence of jack-knifing in the vehicle combination **1.** These scenarios may be determined in any suitable manner known in the art. This may enable maximum propulsion power of the vehicle combination **1** to be achieved in order to reverse uphill or prevent j ack-knifing.

In a fourth mode of modes C, hereinafter denoted mode C3, the trailer controller **100b** is limited to zero-torque operation of the electric drivetrain **6** (i.e. no propulsion or drive that is negative, no regenerative braking or use of a retarder). This may be implemented in response to determining initiation of a mass estimation process of the vehicle combination **1** or a stability control function of the vehicle combination **1.** These scenarios may be determined in any suitable manner known in the art. This enables the trailer controller **100b** to react quickly to any propulsion or brake requests sent by the towing vehicle controller **100a,** since reconnecting the electric drivetrain **6** in the case of decoupling takes time (e.g., hundreds of milliseconds). In a sub-mode of mode C3, hereinafter denoted mode C3X, the trailer controller **100b** is requested to reach zero-torque operation of the electric drivetrain **6** in a shortest possible time. This may be known as a fast cut. This may be triggered, for example, due to a stability issue in the vehicle combination **1.** Limiting the trailer controller **100b** to zero-torque operation of the electric drivetrain **6** may stop self-control of the trailer **5,** i.e. prevent the trailer controller from **100b** controlling (e.g. determining force, torque, acceleration requests and the like) the electric drivetrain **6.**

The operational modes discussed above are summarised in Table 1.

**Table 1**

| **Mode** | **Intended direction of travel** | **Effect on trailer controller/electric drivetrain of the trailer** |
|---|---|---|
| A | Any | Decoupling of the electric drivetrain |
| B0 | Forward | No limit |
| B1 | Forward | Negative-only torque |
| B2 | Forward | Positive-only torque |
| B3 | Forward | Zero-torque |
| B3X | Forward | Zero-torque, fast cut |
| C0 | Rearward | No limit |
| C1 | Rearward | Positive-only torque |
| C2 | Rearward | Negative-only torque |
| C3 | Rearward | Zero-torque |
| C3X | Rearward | Zero-torque, fast cut |

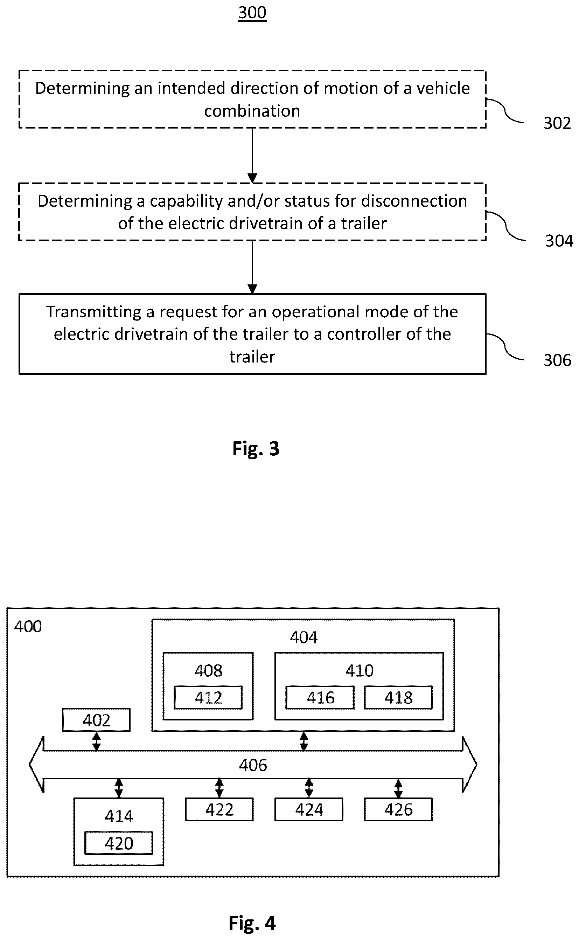

**Fig. 3** is a flow chart of a computer-implemented method **300** for motion control of a trailer of a vehicle combination, such as the trailer **5** of the vehicle combination **1.** The method is performed by processing circuitry of a computer system, for example the processing circuitry **102, 102a, 102b** of computer system **100, 100a, 100b.** In particular, certain (e.g. all) steps of the method may be performed by the processing circuitry **102a** of the towing vehicle controller **100a.**

At **302** an intended direction of motion of a vehicle combination **1** may be determined. This may be determined in any suitable manner known in the art. For example, the intended direction of motion may be determined based on a driver input to the vehicle selector (referred sometimes as gear selector) for drive or reverse. In autonomous driving scenarios, the intended direction of motion may be determined based on a navigation system or parking assist.

At **304,** a capability and/or status for disconnection of the electric drivetrain **6** may be determined. For example, the towing vehicle controller **100a** may receive the capability and/or status from the trailer controller **100b.** As discussed above, the capability for disconnection of the electric drivetrain **6** may include one of the following capabilities: disconnection possible, connection possible, connection or disconnection not allowed. As discussed above, the status of the electric drivetrain **6** may include one of the following statuses: disconnected, connected, error, not available or not installed.

At **306,** a request **80** for an operational mode of the electric drivetrain **6** of the trailer **5** is transmitted to a controller of the trailer **5,** such as the trailer controller **100b.** The request **80** comprises a first request to electrically or mechanically decouple the electric drivetrain **6** from the wheels **19** of the trailer **5** (i.e. a request for mode A), a second request for only positive torque operation of the electric drivetrain **6** (i.e. a request for mode B2 or C1), a third request for only negative torque operation of the electric drivetrain **6** (i.e. a request for mode B1 or C2), or a fourth request for zero-torque operation of the electric drivetrain **6** (i.e. a request for mode B3, B3X, C3, or C3X). A request **80** for an operational mode is a request to implement the operational mode in the trailer **5.** In response to receiving the request **80,** the trailer controller **100b** may implement the requested operational mode. The request **80** may, in some examples, be an instruction that the operational mode must be implemented by the trailer controller **100b.**

The first request may include instructions in line with the description of mode A above. For example, the first request may include a request to decouple the electric drivetrain **6** electrically and/or mechanically. The first request may be transmitted in response to determining that operation of the electric drivetrain **6** is not required or will not be required, for example as a tactical decision to allow the wheels **19** of the trailer **5** to roll when the electric machine(s) **6a** are not being used or will not be used for e.g. propulsion or braking. In some examples, it may be determined that the electric machine(s) **6a** shall not be used during a certain period of time, which may be above a suitable predefined threshold. A decision to decouple the electric drivetrain **6** may be made, for example, based on road conditions such as an (e.g. downhill) incline and/or vehicle parameters such as the mass and velocity of the vehicle combination **1.** Decoupling the electric drivetrain **6** of the trailer **5** may be performed in response to receiving a capability or status for disconnection of the electric drivetrain **6** from the trailer controller **100b** at **304.** Decoupling the electric drivetrain **6** of the trailer **5** may stop self-control of the trailer **5,** i.e. prevent the trailer controller **100b** from controlling (e.g. determining force, torque, acceleration requests and the like) the electric drivetrain **6.**

The second request may include instructions in line with the description of mode B2 or mode C1 above. For example, the second request may include a request for only positive torque operation of the electric drivetrain **6** which, during intended forward motion of the vehicle combination **1,** may be transmitted in response to determining an uphill gradient, initiation of a lane change manoeuvre by the vehicle combination **1,** or the presence of trailer swing in the vehicle combination **1** (mode B2). The second request may include a request for only positive torque operation of the electric drivetrain **6** which, during intended rearward motion of the vehicle combination **1,** may be transmitted in response to determining a downhill gradient or initiation of a turn manoeuvre by the vehicle combination **1** (mode C1).

The third request may include instructions in line with the description of mode B1 or mode C2 above. For example, the third request may include a request for only negative torque operation of the electric drivetrain **6** which, during intended forward motion of the vehicle combination **1,** may be transmitted in response to determining a downhill gradient or initiation of a turn manoeuvre by the vehicle combination **1** (mode B1). The second request may include a request for only negative torque operation of the electric drivetrain **6** which, during intended rearward motion of the vehicle combination **1,** may be transmitted in response to determining an uphill gradient or the presence of j ack-knifing in the vehicle combination **1** (mode C2).

The fourth request may include instructions in line with the description of mode B3, mode B3X, mode C3, or mode C3X above. For example, the fourth request may include a request for zero-torque operation of the electric drivetrain **6** which, during intended forward or rearward motion of the vehicle combination **1,** may be transmitted in response to determining initiation of a mass estimation process of the vehicle combination **1** or a stability control function of the vehicle combination **1** (mode B3 or mode C3). In some examples, the fourth request may include a request to reach zero-torque operation of the electric drivetrain **6** in a shortest possible time (mode B3X or mode C3X). This may be triggered, for example, due to a stability issue in the vehicle combination **1.** Limiting the trailer controller **100b** to zero-torque operation of the electric drivetrain **6** may stop self-control of the trailer **5,** i.e. prevent the trailer controller **100b** from controlling (e.g. determining force, torque, acceleration requests and the like) the electric drivetrain **6.**

**Fig. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1. A computer system (100, 100a) for motion control of a trailer (5) of a vehicle combination (1), the vehicle combination (1) comprising a towing vehicle (3) and at least one trailer (5), the trailer (5) comprising an electric drivetrain (6), the computer system (100, 100a) comprising processing circuitry (102, 102a) configured to: transmit a request (80) for an operational mode of the electric drivetrain (6) of the trailer (5) to a controller (100b) of the trailer (5), wherein the request (80) comprises: a first request to electrically or mechanically decouple the electric drivetrain (6) of the trailer (5) from the wheels (19) of the trailer (5); a second request for only positive torque operation of the electric drivetrain (6) of the trailer (5); a third request for only negative torque operation of the electric drivetrain (6) of the trailer (5); or a fourth request for zero-torque operation of the electric drivetrain (6) of the trailer (5).
Example 2. The computer system (100, 100a) of example 1, wherein the processing circuitry (102, 102a) is configured to transmit the first request in response to receiving, from the controller (100b) of the trailer (5), a capability for disconnection of the electric drivetrain (6) of the trailer (5).
Example 3. The computer system (100, 100a) of example 1 or 2, wherein the processing circuitry (102, 102a) is configured to transmit the first request in response to determining that operation of the electric drivetrain (6) of the trailer (5) is not required or will not be required.
Example 4. The computer system (100, 100a) of example 1, wherein the processing circuitry (102, 102a) is configured to transmit the second, third, or fourth request during intended forward motion of the vehicle combination (1).
Example 5. The computer system (100, 100a) of example 4, wherein the processing circuitry (102, 102a) is configured to: transmit the second request in response to determining an uphill gradient, initiation of a lane change manoeuvre by the vehicle combination (1), or the presence of trailer swing in the vehicle combination (1); transmit the third request in response to determining a downhill gradient or initiation of a turn manoeuvre by the vehicle combination (1); or transmit the fourth request in response to determining initiation of a mass estimation process of the vehicle combination (1) or a stability control function of the vehicle combination (1).
Example 6. The computer system (100, 100a) of example 1, wherein the processing circuitry (102, 102a) is configured to transmit the second, third, or fourth request during intended rearward motion of the vehicle combination (1).
Example 7. The computer system (100, 100a) of example 6, wherein the processing circuitry (102, 102a) is configured to: transmit the second request in response to determining a downhill gradient or initiation of a turn manoeuvre by the vehicle combination (1); transmit the third request in response to determining an uphill gradient or the presence of jack-knifing in the vehicle combination (1); or transmit the fourth request in response to determining initiation of a mass estimation process of the vehicle combination (1) or a stability control function of the vehicle combination (1).
Example 8. The computer system (100, 100a) of any preceding example, wherein the fourth request comprises a request to reach zero-torque operation of the electric drivetrain (6) of the trailer (5) in a shortest possible time.
Example 9. The computer system (100, 100a) of any preceding example, wherein the first or fourth request comprises a request to prevent the controller (100b) of the trailer (5) from controlling the electric drivetrain (6) of the trailer (5).
Example 10. A vehicle combination (1) comprising a towing vehicle (3), a trailer (5) having an electric drivetrain (6), and a computer system (100, 100a) according to any preceding example.
Example 11. A computer-implemented method (300) for motion control of a trailer (5) of a vehicle combination (1), the vehicle combination (1) comprising a towing vehicle (3) and at least one trailer (5), the trailer (5) comprising an electric drivetrain (6), the computer-implemented method (300) comprising: transmitting (306), by processing circuitry (102, 102a) of a computer system (100, 100a), a request (80) for an operational mode of the electric drivetrain (6) of the trailer (5) to a controller (100b) of the trailer (5), wherein the request (80) comprises: a first request to electrically or mechanically decouple the electric drivetrain (6) of the trailer (5) from the wheels (19) of the trailer (5); a second request for only positive torque operation of the electric drivetrain (6) of the trailer (5); a third request for only negative torque operation of the electric drivetrain (6) of the trailer (5); or a fourth request for zero-torque operation of the electric drivetrain (6) of the trailer (5).
Example 12. The computer-implemented method (300) of example 11, comprising transmitting, by the processing circuitry (102, 102a), the first request in response to receiving (304), from the controller (100b) of the trailer (5), a capability for disconnection of the electric drivetrain (6) of the trailer (5).
Example 13. The computer-implemented method (300) of example 11 or 12, comprising transmitting, by the processing circuitry (102, 102a), the first request in response to determining that operation of the electric drivetrain (6) of the trailer (5) is not required or will not be required.
Example 14. The computer-implemented method (300) of example 11, comprising transmitting, by the processing circuitry (102, 102a), the second, third, or fourth request during intended forward motion of the vehicle combination (1).
Example 15. The computer-implemented method (300) of example 14, comprising: transmitting, by the processing circuitry (102, 102a), the second request in response to determining an uphill gradient, initiation of a lane change manoeuvre by the vehicle combination (1), or the presence of trailer swing in the vehicle combination (1); transmitting, by the processing circuitry (102, 102a), the third request in response to determining a downhill gradient or initiation of a turn manoeuvre by the vehicle combination (1); or transmitting, by the processing circuitry (102, 102a), the fourth request in response to determining initiation of a mass estimation process of the vehicle combination (1) or a stability control function of the vehicle combination (1).
Example 16. The computer-implemented method (300) of example 11, comprising transmitting, by the processing circuitry (102, 102a), the second, third, or fourth request during intended rearward motion of the vehicle combination (1).
Example 17. The computer-implemented method (300) of example 16, comprising: transmitting, by the processing circuitry (102, 102a), the second request in response to determining a downhill gradient or initiation of a turn manoeuvre by the vehicle combination (1); transmitting, by the processing circuitry (102, 102a), the third request in response to determining an uphill gradient or the presence of jack-knifing in the vehicle combination (1); or transmitting, by the processing circuitry (102, 102a), the fourth request in response to determining initiation of a mass estimation process of the vehicle combination (1) or a stability control function of the vehicle combination (1).
Example 18. The computer-implemented method (300) of any of examples 11 to 17, wherein the fourth request comprises a request to reach zero-torque operation of the electric drivetrain (6) of the trailer (5) in a shortest possible time.
Example 19. The computer-implemented method (300) of any of examples 11 to 18, wherein the first or fourth request comprises a request to prevent the controller (100b) of the trailer (5) from controlling the electric drivetrain (6) of the trailer (5).
Example 20. A computer program product comprising program code for performing, when executed by processing circuitry (102, 102a), the computer-implemented method (300) of any of examples 11 to 19.
Example 21. A non-transitory computer-readable storage medium comprising instructions, which when executed by processing circuitry (102, 102a), cause the processing circuitry (102, 102a) to perform the computer-implemented method (300) of any of examples 11 to 19.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100, 100a) for motion control of a trailer (5) of a vehicle combination (1), the vehicle combination (1) comprising a towing vehicle (3) and at least one trailer (5), the trailer (5) comprising an electric drivetrain (6), the computer system (100, 100a) comprising processing circuitry (102, 102a) configured to:
transmit a request (80) for an operational mode of the electric drivetrain (6) of the trailer (5) to a controller (100b) of the trailer (5), wherein the request (80) comprises:
a first request to electrically or mechanically decouple the electric drivetrain (6) of the trailer (5) from the wheels (19) of the trailer (5);
a second request for only positive torque operation of the electric drivetrain (6) of the trailer (5);
a third request for only negative torque operation of the electric drivetrain (6) of the trailer (5); or
a fourth request for zero-torque operation of the electric drivetrain (6) of the trailer (5).

2. The computer system (100, 100a) of claim 1, wherein the processing circuitry (102, 102a) is configured to transmit the first request in response to receiving, from the controller (100b) of the trailer (5), a capability for disconnection of the electric drivetrain (6) of the trailer (5).

3. The computer system (100, 100a) of claim 1 or 2, wherein the processing circuitry (102, 102a) is configured to transmit the first request in response to determining that operation of the electric drivetrain (6) of the trailer (5) is not required or will not be required.

4. The computer system (100, 100a) of claim 1, wherein the processing circuitry (102, 102a) is configured to transmit the second, third, or fourth request during intended forward motion of the vehicle combination (1).

5. The computer system (100, 100a) of claim 4, wherein the processing circuitry (102, 102a) is configured to:
transmit the second request in response to determining an uphill gradient, initiation of a lane change manoeuvre by the vehicle combination (1), or the presence of trailer swing in the vehicle combination (1);
transmit the third request in response to determining a downhill gradient or initiation of a turn manoeuvre by the vehicle combination (1); or
transmit the fourth request in response to determining initiation of a mass estimation process of the vehicle combination (1) or a stability control function of the vehicle combination (1).

6. The computer system (100, 100a) of claim 1, wherein the processing circuitry (102, 102a) is configured to transmit the second, third, or fourth request during intended rearward motion of the vehicle combination (1).

7. The computer system (100, 100a) of claim 6, wherein the processing circuitry (102, 102a) is configured to:
transmit the second request in response to determining a downhill gradient or initiation of a turn manoeuvre by the vehicle combination (1);
transmit the third request in response to determining an uphill gradient or the presence of jack-knifing in the vehicle combination (1); or
transmit the fourth request in response to determining initiation of a mass estimation process of the vehicle combination (1) or a stability control function of the vehicle combination (1).

8. The computer system (100, 100a) of any preceding claim, wherein the fourth request comprises a request to reach zero-torque operation of the electric drivetrain (6) of the trailer (5) in a shortest possible time.

9. The computer system (100, 100a) of any preceding claim, wherein the first or fourth request comprises a request to prevent the controller (100b) of the trailer (5) from controlling the electric drivetrain (6) of the trailer (5).

10. A vehicle combination (1) comprising a towing vehicle (3), a trailer (5) having an electric drivetrain (6), and a computer system (100, 100a) according to any preceding claim.

11. A computer-implemented method (300) for motion control of a trailer (5) of a vehicle combination (1), the vehicle combination (1) comprising a towing vehicle (3) and at least one trailer (5), the trailer (5) comprising an electric drivetrain (6), the computer-implemented method (300) comprising:
transmitting (306), by processing circuitry (102, 102a) of a computer system (100, 100a), a request (80) for an operational mode of the electric drivetrain (6) of the trailer (5) to a controller (100b) of the trailer (5), wherein the request (80) comprises:
a first request to electrically or mechanically decouple the electric drivetrain (6) of the trailer (5) from the wheels (19) of the trailer (5);
a second request for only positive torque operation of the electric drivetrain (6) of the trailer (5);
a third request for only negative torque operation of the electric drivetrain (6) of the trailer (5); or
a fourth request for zero-torque operation of the electric drivetrain (6) of the trailer (5).

12. A computer program product comprising program code for performing, when executed by processing circuitry (102, 102a), the computer-implemented method (300) of claim 11.

13. A non-transitory computer-readable storage medium comprising instructions, which when executed by processing circuitry (102, 102a), cause the processing circuitry (102, 102a) to perform the computer-implemented method (300) of claim 11.
